# EUROPEAN PATENT SPECIFICATION

(11) **EP 2 115 807 B1**
(45) Date of publication and mention of the grant of the patent: **28.05.2014**
(21) Application number: 08722954.8
(22) Date of filing: 14.02.2008
(51) Int. Cl.: H01M 10/0567, H01M 10/058, H01M 2/12, H01M 10/052, H01M 10/44, H01M 10/52

(54) **PROCESS FOR THE FABRICATION OF A LITHIUM SECONDARY BATTERY**
VERFAHREN ZUR HERSTELLUNG EINER LITHIUM-SEKUNDÄRBATTERIE
PROCÉDÉ DE FABRICATION D'UNE BATTERIE SECONDAIRE AU LITHIUM

(30) Priority: 16.02.2007 KR 20070016613
(43) Date of publication of application: 11.11.2009
(73) Proprietor: SK Innovation Co., Ltd., Jongro-gu Seoul 110-110 (KR)
(72) Inventor: MIN, Jae Yun, Daejeon 302-280 (KR); OH, Jeon Keun, Daejeon 305-761 (KR); LEE, Eun Joo, Seoul 156-725 (KR); KO, Tae Kon, Chungcheongnam-do 330-830 (KR)
(74) Representative: Kahlhöfer, Hermann
(86) International application number: PCT/KR2008/000865
(87) International publication number: WO 2008/100090

(56) References cited:
- EP-A2- 1 463 143
- JP-A- 62 211 873
- JP-A- 2001 325 988
- JP-A- 2006 294 282
- KR-A- 20000 020 534
- KR-A- 20070 012 094
- US-A- 6 150 050
- US-A1- 2005 233 207
- US-A1- 2006 134 527
- US-A1- 2006 240 327
- US-B1- 7 172 834

## Description

### [Technical Field]

The present invention relates to a method of fabricating a lithium secondary battery, and more particularly, to a method of fabricating a lithium secondary battery, by which the battery is improved in terms of charge-discharge characteristics, lifespan, and temperature characteristics.

### [Background Art]

Recently, as portable electronic products, including camcorders, mobile phones, and notebook computers, are required to be smaller and lighter and to have increased functionality, the demand for high-performance small batteries, which are capable of being used for an extended time and are lightweight and highly reliable, is increasing. Corresponding to such demand, lithium secondary batteries are receiving great attention.

The lithium secondary battery is classified into, depending on the type of electrolyte, a lithium metal battery, a lithium ion battery, and a lithium polymer battery, and further into, depending on the type of package for sealing an electrode assembly, a rectangular battery, a cylindrical battery, and a pouch battery. The pouch battery is mainly used for lithium polymer secondary batteries, and the fabrication method thereof follows.

That is, positive and negative electrode active materials are applied on both surfaces of a collector to manufacture electrode plates, between which a separator is then interposed and stacked, after which a bicell lamination process is carried out, thus manufacturing an electrode assembly. Subsequently, a plasticizer is extracted from the electrode assembly, taps are welded to leads of the electrode assembly, and then the electrode assembly is housed in a pouch case. After the electrode assembly is housed in the pouch case, an electrolytic solution is introduced into the electrode space in the battery case such that the electrode assembly is impregnated with the electrolytic solution.

After the completion of the introduction of the electrolytic solution, the open edge of the pouch is covered and is then primarily sealed. Subsequently, an aging process for stabilizing the battery is conducted, after which pre-charging is conducted to a state-of-charge (SOC) of 10% or less. The pre-charging process prevents the battery case from breaking due to the gassing in the battery case in the event of over-charge of the battery or the like. Through the pre-charging process, the gas is formed in the pouch case. The gas thus formed is removed through an outlet which is open or cut, and the gas outlet is thermally fused and is thus sealed. The process of exhausting the gas from the electrode space and thermally fusing the gas outlet is typically referred to as degassing. These days, as an SBR/CMC system, which is a water-based binder for a negative electrode, is applied to rectangular batteries, the degassing process may be chiefly conducted, or a process of adding a filling liquid in several separate stages may be applied.

In the lithium secondary battery, at the time of pre-charging, lithium ions from lithium metal oxide used for a positive electrode are moved to a carbon (crystalline or amorphous) electrode, serving as a negative electrode, to thus be inserted into the carbon of the negative electrode. Then, the lithium ions react with the carbon negative electrode, thus forming Li₂CO₃, Li₂O, and LiOH, which are then formed into a thin film, called an SEI (solid electrolyte interface), on the surface of the negative electrode. Such an SEI has an influence on the movement of ions and electric charges to thus result in changes in the performance of the battery. The properties of the film are known to be greatly changed depending on the type of solvent used in the electrolytic solution and the properties of the additive.

When the lithium secondary battery is continuously used for an extended time, or is left to stand at high temperatures, a swelling phenomenon, in which the battery swells due to gassing, occurs. The amount of gas that is generated is known to be dependent on the state of SEI. Hence, in order to prevent the swelling phenomenon at high temperatures, techniques for inducing the stable formation of the SEI are required. Further, known are methods of improving the high-temperature lifespan of the lithium secondary battery by adding a negative electrode SEI improver, such as LiF₂BC₂O₄, 3,9-divinyl-2,4,8,10-tetraoxaspiro[5,5]undecane, LiB(C₂O₄)₂, poly(ethyleneglycol) borate and derivatives thereof, halogen-substituted carbonate, and vinyl silane, to the electrolyte.

In JP-A-2006/294282 a method of manufacturing a lithium-ion secondary battery is disclosed. The method includes the following processes; at least two electrolyte solution pouring processes of pouring non-aqueous electrolyte solution inside a battery precursor through an electrolyte pouring port fixed on a battery can or a battery cover, a process of sealing the electrolyte pouring port after the last electrolyte solution pouring process, and at least one charging process after the first electrolyte solution pouring process and before the last electrolyte solution pouring process.

US-A-2005/233207 discloses an electrolyte for a lithium-ion secondary battery comprising an additive to prevent swelling of the battery caused by a gas generated in the battery upon storage at a high temperature, thereby inhibiting destruction of the SEI layer.

US-B-7172834 describes a lithium battery including an electrolyte comprised of a non-aqueous solvent, and a salt mixture. The salt mixture includes an alkali metal electrolyte salt and an additive salt having an anion of a mixed anhydride of oxalic acid and boric acid.

The application US-A-2006/240327 reveals the use of lithium bis(oxalate)borate (LiBOB) as an additive in a lithium secondary battery which provides improved battery performance such as long life and high capacity retention after high temperature storage.

The disclosure of US-A-2006/134527 relates to non-aqueous electrolytes having electrode stabilizing additives, stabilized electrodes, and electrochemical devices containing the same. The described electrolytes contain an alkali metal salt, a polar aprotic solvent, and an electrode stabilizing additive.

An electrolyte of a lithium secondary battery provided by application EP-A-1463143 includes lithium salts, an organic solvent with a high boiling point, and a carbonate-based additive compound having substituents selected from the group consisting of a halogen, a cyano (CN), and a nitro (NO₂). The electrolyte improves discharge, low temperature, and cycle life characteristics of a lithium secondary battery

KR-A-2007/0012094 provides a nonaqueous electrolyte for lithium secondary batteries, wherein a vinylsilane SEI layer stabilizer decomposes before a nonaqueous electrolyte upon initial charging to form a stable SEI layer, and thus prevents decomposition of a nonaqueous electrolyte and reduces irreversible capacity. To form a stable layer upon high-temperature charging and discharging of a lithium battery, the described nonaqueous electrolyte for lithium secondary batteries consists of an organic solvent, a lithium salt, and an additive.

However, because the aforementioned negative electrode SEI improver has lower reducibility than general additives such as VC (vinylene carbonate) or VEC (vinyl ethylene carbonate), reduction may be conducted only when the voltage of the negative electrode is further decreased. Thus, when pre-charging to SOC of 10% or less, and then degassing as in the conventional degassing process are conducted, the additive is not 100% reduced, and thus gas is additionally generated in a subsequent formation process, undesirably causing swelling problems.

### [Disclosure]

### [Technical Problem]

Accordingly, the present invention has been devised to solve the problems encountered in the related art, and provides a method of fabricating a lithium secondary battery, in which a negative electrode SEI improver is used to improve the high-temperature lifespan of the lithium secondary battery, and deep pre-charging progresses to thus minimize the swelling phenomenon after a formation process, thereby exhibiting superior charge-discharge characteristics, lifespan, and temperature characteristics.

### [Technical Solution]

According to the present invention, a method of fabricating a lithium secondary battery is provided, which comprises interposing a separator between a positive electrode plate and a negative electrode plate, thus manufacturing an electrode assembly; housing the electrode assembly in a battery case, introducing an additive-containing electrolytic solution, and then sealing the battery case; subjecting the sealed battery case to pre-charging, and then removing gas generated by the pre-charging; and subjecting the battery to formation, wherein the additive is one or more selected from among LiF₂BC₂O₄, 3,9-divinyl-2,4,8,10-tetraoxaspiro [5,5]undecane, LiB(C₂O₄)₂, poly(ethyleneglycol)borate and derivatives thereof, halogen-substituted carbonate, and vinyl silane, and the pre-charging is conducted in a range of 50∼100% of a battery capacity, wherein the pre-charging is conducted under conditions of current of 0.1 - 1 C and voltage of 3.6-4.4 V.

### [Advantageous Effects]

Compared to conventional methods, in which VC (vinylene carbonate) or VEC (vinyl ethylene carbonate) is used as an additive and degassing is conducted after pre-charging to SOC of 10% or less, the method of fabricating a lithium secondary battery according to the present invention is advantageous in that a high-temperature lifespan improver, acting to form an SEI of a negative electrode, is added, and deep pre-charging to 50∼100% and then degassing are conducted. Thereby, in the lithium secondary battery fabricated through the method of the present invention, the high-temperature lifespan of the battery is increased, and, as well, a swelling phenomenon, caused by the additional generation of gas, can be effectively eliminated.

### [Description of Drawings]

FIG. 1 is a graph illustrating the increase in the thickness of the lithium secondary battery fabricated through the method of the present invention and the lithium secondary battery fabricated through a conventional method; and
FIG. 2 is a graph illustrating the increase in ASI (area specific impedance) over time when the lithium secondary battery fabricated through the method of the present invention and the lithium secondary battery fabricated using a conventional additive are respectively left to stand at high temperatures.

### [Best Mode]

Hereinafter, a detailed description will be given of the present invention.

In order to solve problems related to the occurrence of a swelling phenomenon at the time of subjecting a lithium secondary battery, the electrolyte of which is added with an SEI improver for improving a high-temperature lifespan, to a formation process, the present invention provides a method of fabricating a lithium secondary battery, comprising conducting pre-charging to 50∼100% of a battery capacity and then degassing.

According to the present invention, the method of fabricating the lithium secondary battery includes interposing a separator between a positive electrode plate and a negative electrode plate, thus manufacturing an electrode assembly. The electrode assembly comprises positive/negative electrode active materials and a collector, and may be manufactured through methods typical in the art. For example, a negative electrode film and a positive electrode film are manufactured using the positive/negative electrode active materials, and a separator film, which is an insulator, is manufactured. Then, the positive/negative electrode films are pretreated, coated, and dried, after which the positive/negative electrode films are applied on the collector and are wound or stacked, along with the separator film, which is the insulator, thus fabricating the battery. As such, the positive/negative electrode active materials, the collector, and the separator film may be of types that are typical in the art.

Further, the method includes housing the electrode assembly in a battery case, introducing an additive-containing electrolytic solution, and sealing the battery case. The battery case is used to package the battery, and may be a rectangular type or a pouch type. When the battery case is a pouch type, an aluminum laminate pouch may be used, and the aluminum laminate pouch, which is a film about 100 µm thick composed of nylon-aluminum-polypropylene layers, is thermally fused by heat of 160∼210°C and pressure of 1∼3 kg_{f}/cm³ and is thus sealed.

In the electrolytic solution used in the method of fabricating the lithium secondary battery according to the present invention, a solvent may include, as a carbonate-based solvent, one or a mixture of two or more selected from among EC (ethylene carbonate), DMC (dimethyl carbonate), EMC (ethyl methyl carbonate), PC (propylene carbonate), and DEC (diethyl carbonate), and a lithium salt may include one or more selected from among LiPF₆, LiBF₄, LiClO₄, LiN(SO₂CF₃)₂, Li₂B₁₂F₉H₃, and LiN(SO₂CF₂CF₃)₂, which are typically used for lithium secondary batteries, and may have a concentration of 0.5∼1.5 M.

In the method of fabricating the lithium secondary battery according to the present invention, the additive, which is added to the electrolyte, is used to improve the negative electrode SEI in order to suppress the increase in the ASI (area specific impedance) at the time of leaving the battery to stand at high temperatures. Examples of the additive include LiF₂BC₂O₄, 3,9-divinyl-2,4,8,10-tetraoxaspiro[5,5]undecane, LiB(C₂O₄)₂, poly(ethyleneglycol)borate and derivatives thereof, halogen-substituted carbonate, and vinyl silane, which may be used alone or in mixtures of two or more.

The additive is used in an amount of 0.1∼10.0 wt%, and preferably 0.5∼3.0 wt%, based on the amount of a final electrolytic solution. When the amount of the additive is less than 0.1 wt%, the high-temperature lifespan improvement effect is insignificant. On the other hand, when the amount thereof exceeds 10.0 wt%, the amount of gas generated by the pre-charging is too much, and thus the surface of the electrode is not uniformly charged.

The above additive is responsible for improving the high-temperature lifespan, but the reducibility thereof is lower than general additives. Therefore, when pre-charging is conducted to SOC of 10% or less of the battery capacity, as in conventional methods, swelling occurs in the formation process, and thus initial resistance is increased and the battery cannot be placed in the space of the battery case. In the method of the present invention using the above additive, a deep pre-charging procedure, described below, is essentially required.

In order to assure a sufficient period of time to uniformly distribute the introduced electrolytic solution throughout the electrodes of the electrode assembly in a sealed state, an aging process may be performed for up to 72 hours before the pre-charging. This aging process is conducted under conditions of atmospheric pressure and 20∼60°C.

The pre-charging is performed to primarily charge the electrode assembly using the electrode terminals of the electrode assembly, thereby activating the active materials while generating the gas in the battery in advance and removing it. The pre-charging for degassing is generally conducted only to 10% or less of the capacity of the lithium secondary battery to shorten the processing time, but, in the present invention, in order to overcome the low reducibility of the additive, deep pre-charging to 50∼100% of the battery capacity is conducted.

The degassing is performed to remove the gas in the battery generated by the pre-charging, and includes opening the battery or cutting a portion of the battery case, applying a vacuum of ∼750 mmHg for 10 sec, thermally sealing the opened portion of the battery case, and setting the pressure to atmospheric pressure.

Alternatively, the degassing may be carried out using a gas chamber connected to the battery case for receiving the electrode assembly. Specifically, the gas generated by the pre-charging may be exhausted into the gas chamber, the connection path may be sealed, and then the gas chamber may be cut, thereby removing the gas.

The formation is a process of charging the lithium secondary battery in a discharge state to thus activate it, and is typically conducted in a manner of conducting a full charge at a current of 0.2 C, an OCV (open circuit voltage) defect detection while aging is performed, a full discharge to thus determine the discharge capacity, and charge to 50% of the capacity for loading. However, the present invention is not limited thereto, and various methods of formation, known in the art, may be applied.

When the pre-charging is conducted up to 100% of the battery capacity, in the formation process, the procedure of a full charge at a current of 0.2 C is omitted, and the OCV defect detection through aging may be directly performed.

### [Mode for Invention]

A better understanding of the present invention may be obtained in light of the following examples which are set forth to illustrate, but are not to be construed to limit the present invention.

### Example 1

As a positive electrode active material and a positive electrode conductive material, spinel type LiMn₂O₄ and acetylene black were used, respectively, and graphite was used as a negative electrode active material. An electrolytic solution, obtained by dissolving 1M LiPF₆ salt in an organic solvent mixture of EC (ethylene carbonate) : EMC (ethyl methyl carbonate) at 3:7, was used. As a positive electrode binder, PVDF (polyvinylidenefluoride) was used, and as a negative electrode binder, an SBR/CMC (styrene butadiene rubber/carboxyl methyl cellulose) system was used. A pouch was formed of aluminum and had a thickness of 120 µm. A separator was a polyethylene separator.

In order to manufacture a positive electrode plate, the positive electrode active material, the conductive material, and the binder were added at a weight ratio of 94:3:3 to a binder solution (an NMP (N-methyl pyrrolidone) solvent containing 10 wt% binder), and were then mixed together, thus manufacturing the electrode plate having a loading level of 23 mg/cm². In order to manufacture a negative electrode plate, the negative electrode active material, SBR, and CMC were added at a weight ratio of 97.5:1.5:1 to a CMC aqueous solution (containing 10 wt% CMC), and were then mixed together, thus manufacturing the electrode plate having a loading level of 10 mg/cm².

A separator was interposed between the positive electrode plate and the negative electrode plate, followed by conducting winding and compression, thus manufacturing an electrode assembly. The electrode assembly was housed in a battery case, after which an electrolytic solution, obtained by dissolving 1.0 M LiPF₆ as an electrolytic salt in a solvent mixture of EC : EMC at a weight ratio of 3:7 and then adding 3.0 wt% of LiF₂BC₂O₄ based on the amount of a final electrolytic solution, was introduced into the battery, and then the battery case was sealed.

Using electrode terminals mounted to the positive and negative electrode plates of the electrode assembly, the electrode assembly was subjected to pre-charging. The pre-charging was conducted to 50% of a battery capacity under conditions of current of 0.1∼1 C and voltage of 3.6∼4.4 V through constant current/constant voltage-regulated charging.

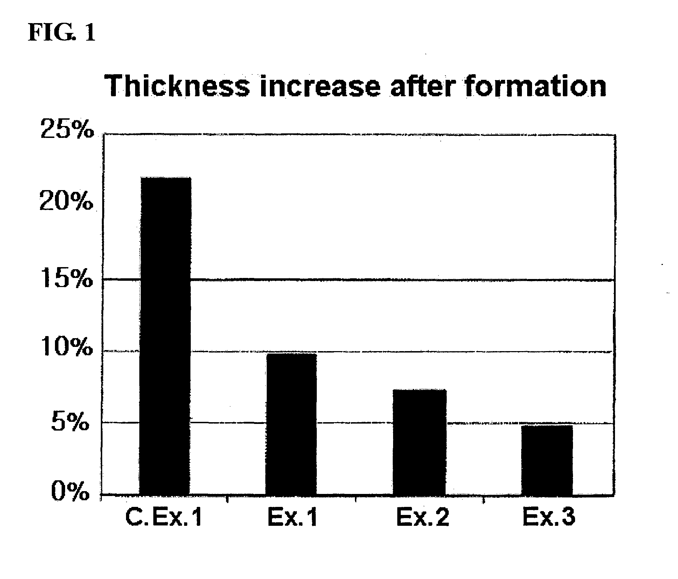

The gas generated by the pre-charging was exhausted into a gas chamber via a gas chamber connection path, the connection path was thermally fused, the gas chamber was cut, and then a formation process was conducted in a manner of full charge-full discharge-50% charge, thus fabricating a lithium secondary battery. The change in thickness of the battery thus fabricated was determined before and after the formation process. The thickness increase thereof is shown in FIG.1.

### Example 2

A lithium secondary battery was fabricated in the same manner as in Example 1, with the exception that pre-charging was conducted to 70% of the battery capacity. The change in thickness of the battery thus fabricated was determined before and after the formation process. The thickness increase thereof is shown in FIG.1.

### Example 3

A lithium secondary battery was fabricated in the same manner as in Example 1, with the exception that pre-charging was conducted to 100% of the battery capacity, and a full charge procedure was omitted in the formation process. The change in thickness of the battery thus fabricated was determined before and after the formation process. The thickness increase thereof is shown in FIG. 1.

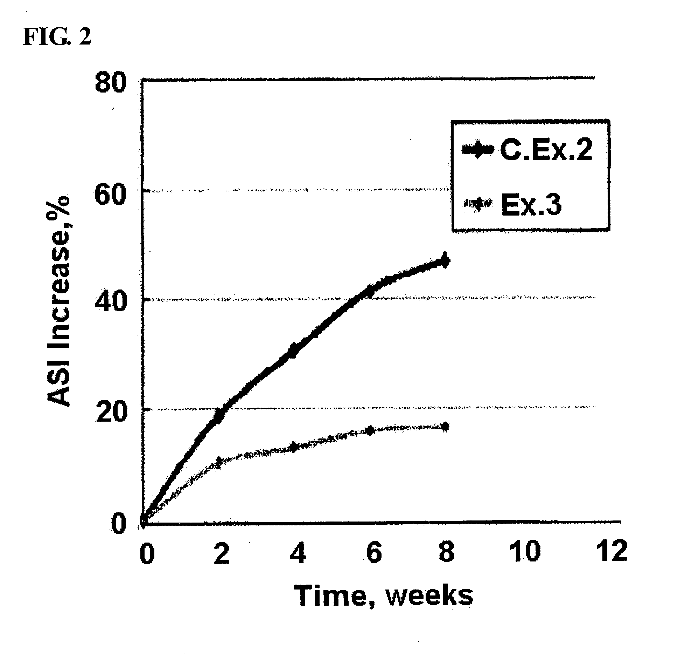

Further, the battery was left to stand at a high temperature of 55 °C, and ASI was measured every 2 weeks, and thus the change in ASI over time was observed. The results are shown in FIG. 2.

### Comparative Example 1

A lithium secondary battery was fabricated in the same manner as in Example 1, with the exception that pre-charging was conducted only to 10% of the battery capacity. The change in thickness of the battery thus fabricated was determined before and after the formation process. The thickness increase thereof is shown in FIG. 1.

### Comparative Example 2

A lithium secondary battery was fabricated in the same manner as in Example 3, with the exception that VC (vinylene carbonate), as the additive, was used in an amount of 3.0 wt% based on the amount of a final electrolytic solution. The battery thus fabricated was left to stand at a high temperature of 55 °C, and ASI was measured every 2 weeks, and thus the change in ASI over time was observed. The results are shown in FIG. 2.

As is apparent from FIG. 1, the thickness of the lithium secondary battery fabricated through the conventional method including pre-charging to 10% of the battery capacity was increased by about 22% of the initial thickness. However, in the lithium secondary battery realized through pre-charging to 50∼100% according to the method of the present invention, the thickness thereof was increased by less than 10% of the initial battery thickness. Accordingly, it is shown that a swelling phenomenon is remarkably decreased through degassing, compared to the battery resulting from the conventional method.

As is apparent from FIG. 2, even if the same pre-charging to 100% of the battery capacity and degassing are conducted, when the conventional additive, for example, VC or VEC, is used, instead of the additive of the present invention, for example, LiF₂BC₂O₄, 3,9-divinyl-2,4,8,10-tetraoxaspiro[5,5]undecane, LiB(C₂O₄)₂, poly(ethyleneglycol)borate and derivatives thereof, halogen-substituted carbonate, and vinyl silane, the interval between the electrodes is increased at the time of leaving the battery to stand at high temperatures, undesirably increasing ASI. Accordingly, it is shown that the lifespan of the lithium secondary battery using the LiF₂BC₂O₄ additive according to the method of the present invention is prolonged at high temperatures, compared to that of the conventional lithium secondary battery using an additive such as VC.

## Claims

1. A method of fabricating a lithium secondary battery, comprising:
interposing a separator between a positive electrode plate and a negative electrode plate, thus manufacturing an electrode assembly;
housing the electrode assembly in a battery case, introducing an additive-containing electrolytic solution, and then sealing the battery case;
subjecting the sealed battery case to pre-charging, and then removing gas generated by the pre-charging; and
subjecting the battery to formation,
wherein the additive is one or more selected from among LiF₂BC₂O₄, 3,9-divinyl-2,4,8,10-tetraoxaspiro [5,5]undecane, LiB(C₂O₄), poly(ethyleneglyco1)borate and derivatives thereof, halogen-substituted carbonate, and vinyl silane, and
the pre-charging is conducted in a range of 50∼100% of a battery capacity;
wherein the pre-charging is conducted under conditions of current of 0.1∼1C and voltage of :

2. The method according to claim 1, wherein the battery case is connected with a gas chamber through a connection path, and
the removing the gas generated by the pre-charging is conducted by exhausting the gas into the gas chamber, thermally compressing and sealing the connection path, and then eliminating the gas chamber.

3. The method according to claim 1, wherein the additive is used in an amount of 0.1∼10.0 wt% based on an amount of a final electrolytic solution.

## Patentansprüche

1. Verfahren zum Herstellen eines Lithium-Akkumulators, umfassend:
Einfügen eines Separators zwischen einer positiven Elektrodenplatte und einer negativen Elektrodenplatte und dadurch Herstellen einer Elektrodenanordnung;
Unterbringen der Elektrodenanordnung in einem Batteriegehäuse, Einfüllen einer additivhaltigen elektrolytischen Lösung und dann Abdichten des Batteriegehäuses;
Unterziehen des abgedichteten Batteriegehäuses einer Vorladung und dann Entfernen von Gas, das durch das Vorladen erzeugt ist; und
Unterziehen der Batterie einer Formierung,
wobei das Additiv eine oder mehrere Substanzen ist, die unter LiF₂BC₂O₄, 3,9-Divinyl-2,4,8,10-tetraoxaspiro [5,5] undecan, LiB (C₂O₄)₂, Poly(ethylenglykol)borat und Derivaten derselben, halogensubstituiertem Carbonat und Vinylsilan ausgewählt sind, und
das Vorladen in einem Bereich von 50∼100 % der Batteriekapazität ausgeführt ist;
wobei das Vorladen unter Bedingungen des Stroms von 0,1∼1 C und der Spannung von 3,6∼4,4 V ausgeführt wird.

2. Verfahren nach Anspruch 1, wobei das Batteriegehäuse mit einer Gaskammer durch eine Verbindungsleitung verbunden ist, und
das Entfernen des Gases, das durch das Vorladen erzeugt wird, durch Austreiben des Gases in die Gaskammer, thermisches Komprimieren und Abdichten der Verbindungsleitung und dann Entfernen der Gaskammer ausgeführt wird.

3. Verfahren nach Anspruch 1, wobei das Additiv in einer Konzentration von 0,1∼10,0 Gew-% auf der Grundlage einer Menge einer finalen elektrolytischen Lösung verwendet wird.

## Revendications

1. Procédé de fabrication d'une batterie rechargeable au lithium, comprenant :
l'insertion d'un séparateur entre une plaque d'électrode positive et une plaque d'électrode négative, pour fabriquer ainsi un ensemble électrode ;
le logement de l'ensemble électrode dans un boîtier de batterie, l'introduction d'une solution électrolytique contenant un additif, puis le scellement du boîtier de batterie ;
la soumission du boîtier de batterie scellé à une précharge, puis le retrait des gaz générés par la précharge ; et
la soumission de la batterie à une formation,
dans lequel l'additif est une ou plusieurs substances choisies parmi le LiF₂BC₂O₄, le 3,9-divinyl-2,4,8,10-tétraoxaspiro[5,5]undécane, le LiB(C₂O₄)₂, le borate de poly(éthylène glycol) et ses dérivés, les carbonates substitués par un halogène et le vinylsilane, et
la précharge est réalisée dans une gamme de 50 - 100 % ou moins de la capacité de la batterie ; dans lequel la précharge est réalisée dans des conditions de courant de 0,1-1 C et de tension de 3,6-4,4 V.

2. Procédé selon la revendication 1, dans lequel le boîtier de batterie est relié à une chambre de gaz par uns chemin de connexion, et
le retrait des gaz générés par la précharge est réalisé en évacuant les gaz dans la chambre de gaz, en comprimant thermiquement et en scellant le chemin de connexion, puis en éliminant la chambre de gaz.

3. Procédé selon la revendication 1, dans lequel l'additif est utilisé dans une quantité de 0,1-10,0 % en poids, par rapport à la quantité de la solution électrolytique finale.
